# EUROPEAN PATENT APPLICATION

(11) **EP 4 755 558 A1**
(43) Date of publication of application: **10.06.2026**
(21) Application number: 25208521.2
(22) Date of filing: 14.10.2025
(51) Int. Cl.: B23C 5/10

(54) **METHOD FOR MANUFACTURING END MILL**

(30) Priority: 09.12.2024 JP 2024214547
(71) Applicant: DIJET INDUSTRIAL CO., LTD., Hirano-ku Osaka-shi Osaka 547-0002 (JP)
(72) Inventor: Asoshina, Shigefumi, Osaka, 5470002 (JP); Nagata, Masafumi, Osaka, 5470002 (JP)
(74) Representative: Glawe, Delfs, Moll

(57) **Abstract**

In an end mill in which a tip portion of a tool body includes three or more odd number of gashes to define three or more odd number of end cutting edges, during cutting by rotating the tool body at high speed, occurrence of chattering vibration in the tool body is prevented to enhance surface finish of a workpiece and chip dischargeability. In an end mill in which a tip portion of a tool body 10 includes three gashes 11a through 11c to define three end cutting edges 13a through 13c such that the end cutting edge 13a is configured to reach a rotation center o while the other end cutting edges 13b and 13c are configured not to reach the rotation center, the size of the gash provided corresponding to each of the end cutting edges is adjusted to cause a center of gravity of the tool body to approach a rotation axis L.

## Description

### TECHNICAL FIELD

The present teaching relates to a method for manufacturing an end mill in which a tip portion of a tool body includes a plurality of gashes to define a plurality of end cutting edges. In particular, the present teaching is characterized in that, in an end mill in which a tip portion of the tool body includes three or more odd number of gashes to define three or more odd number of end cutting edges such that one of the odd number of end cutting edges is configured to reach a rotation center while the other end cutting edges are configured not to reach the rotation center, it prevents degradation of surface finish of a workpiece caused by chattering vibration of the tool body and enhances chip dischargeability during cutting performed by rotating the tool body at high speed.

### BACKGROUND ART

An end mill in which a tip portion of a tool body includes a plurality of gashes to define a plurality of end cutting edges has been conventionally used for cutting a workpiece through rotation.

As such an end mill, Patent Documents 1 and 2 disclose end mills in each of which a tip portion of a tool body includes three gashes to define three end cutting edges such that one of the end cutting edges is configured to reach a rotation center while the other two end cutting edges are configured not to reach the rotation center.

As described in Patent Documents 1 and 2, in the case where the tip portion of the tool body includes three gashes to define three end cutting edges such that one of the end cutting edges is configured to reach the rotation center while the other two end cutting edges are configured not to reach the rotation center, the volume of the gash defining the end cutting edge located rearward in the rotation direction of the end cutting edge configured to reach the rotation center is small. Accordingly, the center of gravity of the tool body is biased, and when the tool body is rotated at high speed to perform cutting, chattering vibration occurs in the tool body so that surface finish of a workpiece degrades, and in addition, dischargeability of chips generated by the end cutting edge located rearward in the rotation direction of the end cutting edge configured to reach the rotation direction deteriorates, resulting in chip clogging.

### CITATION LIST

### PATENT DOCUMENTS

Patent Document 1: Japanese Patent No. 6246825
Patent Document 2: Japanese Patent No. 6709788

### SUMMARY OF INVENTION

### TECHNICAL PROBLEM

It is therefore an object of the present teaching to solve problems as described above in an end mill in which a tip portion of a tool body includes three or more odd number of gashes to define three or more odd number of end cutting edges such that one of the odd number of end cutting edges is configured to reach a rotation center while the other end cutting edges are configured not to reach the rotation center.

Specifically, the present teaching is characterized in that, in an end mill in which a tip portion of a tool body includes three or more odd number of gashes to define three or more odd number of end cutting edges such that one of the three or more odd number of end cutting edges is configured to reach a rotation center while the other end cutting edges are configured not to reach the rotation center, biassing of the center of gravity of the tool body is prevented, and during cutting performed by rotating the tool body at high speed, occurrence of chattering vibration in the tool body is suppressed to enhance surface finish of a workpiece and dischargeability of chips produced by the end cutting edge located rearward in the rotation direction of the end cutting edge configured to reach the rotation center and thereby preventing occurrence of chip clogging.

### SOLUTION TO PROBLEM

To solve the problems as described above, in a method for manufacturing an end mill according to the present teaching, in an end mill in which a tip portion of a tool body includes three or more odd number of gashes to define three or more odd number of end cutting edges such that one of the odd number of end cutting edges is configured to reach a rotation center while the other end cutting edges are configured not to reach the rotation center, when adjusting a tilt angle in a depth direction and/or an opening angle in a radial direction of the gash provided corresponding to each of the end cutting edges to cause a center of gravity of the tool body to approach a rotation axis by adjusting a size of the gash provided corresponding to each of the end cutting edges, the tilt angle in the depth direction and/or the opening angle in the radial direction of the gash defining the end cutting edge located rearward in a rotation direction of the end cutting edge configured to reach the rotation center is made larger than the tilt angle and/or the opening angle of the gash defining the other end cutting edges.

In the manner described above, in the end mill in which the tip portion of the tool body includes the three or more odd number of gashes to define the three or more odd number of end cutting edges such that one of the odd number of end cutting edges is configured to reach the rotation center while the other end cutting edges are configured not to reach the rotation center, when the center of gravity of the tool body is caused to approach the rotation axis by adjusting the size of the gash corresponding to each of the end cutting edges, occurrence of chattering vibration in the tool body is suppressed during cutting performed by rotating the tool body at high speed, thereby enhancing surface finish of a workpiece.

Further, in the present teaching, in adjusting the size of the gash corresponding to each of the end cutting edges to cause the center of gravity of the tool body to approach the rotation axis as described above, the tilt angle in the depth direction and/or the opening angle in the radial direction of the gash corresponding to each end cutting edge is adjusted. This reduces variation in size and volume of the gashes corresponding to the end cutting edges, and uniformizes chip dischargeability in the gashes to thereby prevent clogging of chips.

Furthermore, in the present teaching, in causing the center of gravity of the tool body to approach the rotation axis by adjusting the tilt angle in the depth direction and/or the opening angle in the radial direction of the gash corresponding to each of the end cutting edges as described above, the thickness of the tool body is large and the volume of the chip discharge portion is small at the rear in the rotation direction of the end cutting edge configured to reach the rotation center. Thus, the tilt angle in the depth direction and/or the opening angle in the radial direction of the gash defining the end cutting edge located rearward in the rotation direction of the end cutting edge configured to reach the rotation center is made larger than those of the gashes defining the other end cutting edges as described above and the gash defining the end cutting edge located rearward in the rotation direction of the end cutting edge configured to reach the rotation center is enlarged to thereby suppress occurrence of variation in the size and volume of the gashes corresponding to the end cutting edges.

### ADVANTAGEOUS EFFECTS OF INVENTION

According to the present teaching, in the end mill in which the tip portion of the tool body includes the three or more odd number of gashes to define the three or more odd number of end cutting edges such that one of the odd number of end cutting edges is configured to reach the rotation center while the other end cutting edges are configured not to reach the rotation center, the center of gravity of the tool body is caused to approach the rotation axis by adjusting the size of the gashes corresponding to the end cutting edges as described above. Thus, during cutting by rotating the tool body at high speed, occurrence of chattering vibration in the tool body is suppressed, thereby enhancing surface finish of a workpiece.

In addition, in adjusting the size of the gash corresponding to each of the end cutting edges to cause the center of gravity of the tool body to approach the rotation axis, the tilt angle in the depth direction and/or the opening angle in the radial direction of the gash corresponding to each end cutting edge is adjusted, and in the present teaching, the tilt angle in the depth direction and/or the opening angle in the radial direction of the gash defining the end cutting edge located rearward in the rotation direction of the end cutting edge configured to reach the rotation direction is made larger than those of the gashes defining the other end cutting edges. Thus, variation in the size and volume of the gashes corresponding to the end cutting edge is suppressed, and chip dischargeability in the gashes is uniformized, thereby preventing occurrence of chip clogging.

### BRIEF DESCRIPTION OF DRAWINGS

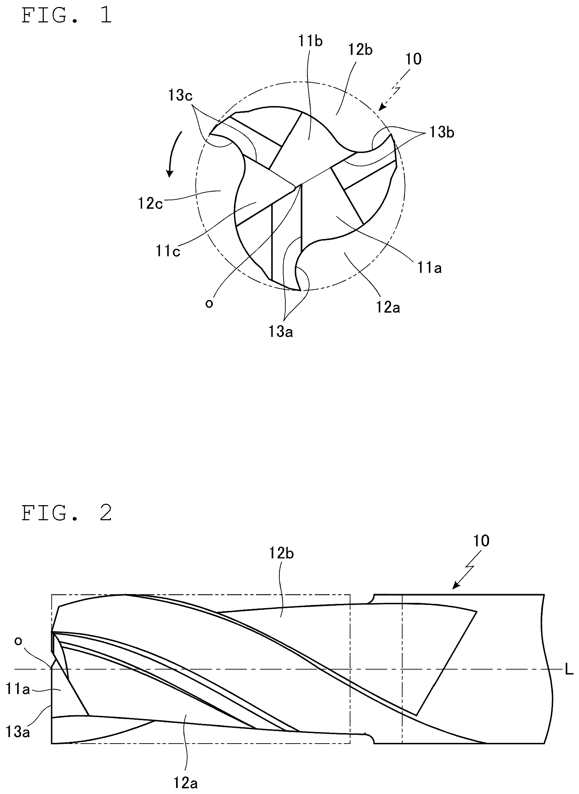

FIG. 1 is a schematic front view illustrating a tip side of an end mill manufactured by a method for manufacturing an end mill according to an embodiment of the present teaching in a state where a tip portion of a tool body includes three gashes to define three end cutting edges.
FIG. 2 is a schematic side view of the end mill according to the embodiment.

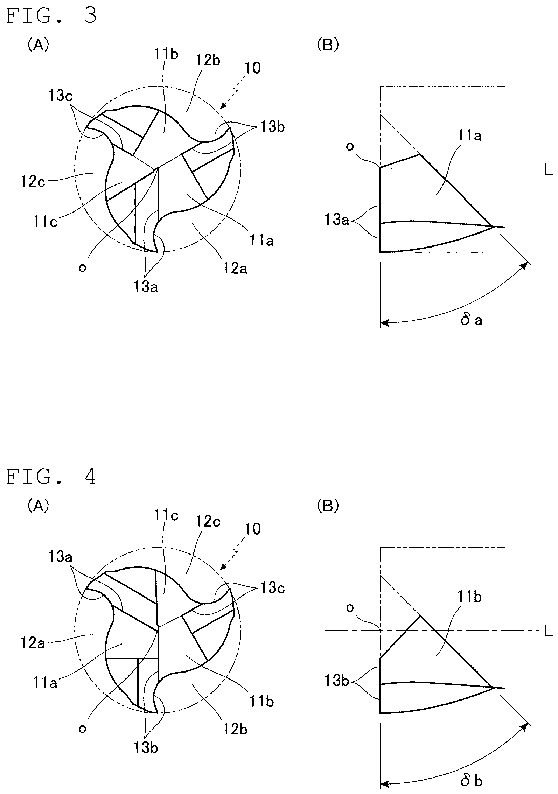

FIG. 3A is a schematic front view of the tip side illustrating a state where a first end cutting edge defined by a first gash configured to reach a rotation center of the tool body is located at the bottom, and FIG. 3B is a side explanatory view illustrating a tilt angle (gash angle) in a depth direction of the first gash, in the end mill according to the embodiment.
FIG. 4A is a schematic front view of the tip side illustrating a state where a second end cutting edge located forward in a rotation direction of the first end cutting edge and configured not to reach the rotation center of the tool body is located at the bottom, and FIG. 4B is a side explanatory view illustrating a tilt angle (gash angle) in the depth direction of a second gash processed to define the second end cutting edge, in the end mill according to the embodiment.

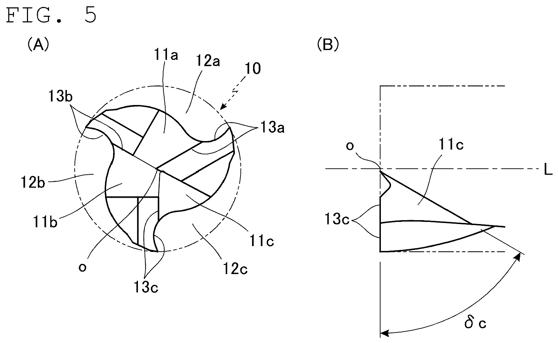

FIG. 5A is a schematic front view of the tip side illustrating a state where a third end cutting edge located rearward in the rotation direction of the first end cutting edge and configured not to reach the rotation center of the tool body is located at the bottom, and FIG. 5B is a side explanatory view illustrating a tilt angle (gash angle) in the depth direction of a third gash processed to define the third end cutting edge, in the end mill according to the embodiment.

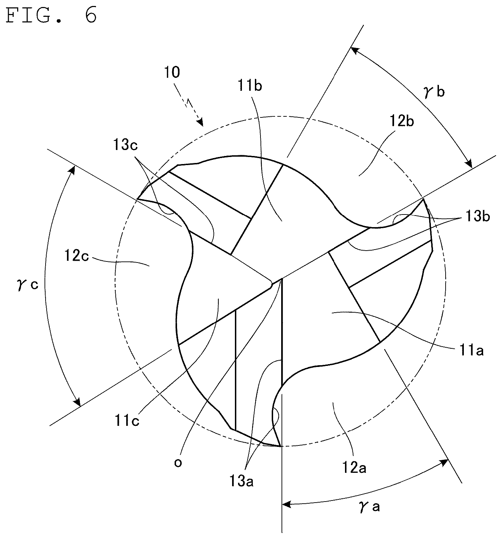

FIG. 6 is an enlarged front view of the tip side illustrating opening angles (gash opening angles) in the radial directions of first through third three gashes provided in the tip portion of the tool body, in the end mill according to the embodiment.

### DESCRIPTION OF EMBODIMENT

A method for manufacturing an end mill according to one embodiment of the present teaching will be specifically described hereinafter with reference to the accompanying drawings. The method for manufacturing an end mill in the present teaching is not limited to the method described in the following embodiment and can be carried out with an appropriate change without departing from the gist of the invention.

In the end mill according to this embodiment, as illustrated in FIGS. 1 through 6, a first gash 11a, a second gash 11b, and a third gash 11c are provided as gases on an outer periphery of a tip portion of a tool body 10 sequentially forward in the rotation direction of the tool body 10 to be continuous with corresponding spiral flutes 12a, 12b, and 12c.

A first end cutting edge 13a is defined by the first gash 11a to reach a rotation center o of the tool body 10. A second end cutting edge 13b is defined by the second gash 11b located forward of the first gash 11a in the rotation direction of the tool body 10 and is configured not to reach the rotation center o of the tool body 10. A third end cutting edge 13c is defined by the third gash 11c located forward of the second gash 11b in the rotation direction of the tool body 10 and rearward of the first gash 11a in the rotation direction of the tool body 10 and is configured not to reach the rotation center o of the tool body 10.

Here, in providing the first gash 11a, the second gash 11b, and the third gash 11c, as illustrated in FIGS. 3(A) and 3(B) through FIGS. 5(A) and 5(B), in the case of comparing tilt angles (hereinafter referred to as gash angles) δa, δb, and δc in the depth direction of the first through third gashes 11a, 11b, and 11c with respect to a tip end surface perpendicular to a rotation axis L of the tool body 10, the gash angle δc of the third gash 11c located rearward in the rotation direction of the first end cutting edge 13a configured to reach the rotation center o of the tool body 10 is made larger than each of the gash angle δa of the first gash 11a and the gash angle δb of the second gash 11b. In addition, as illustrated in FIG. 6, in the case of comparing opening angles (hereinafter referred to as gash opening angles) γa, γb, and γc in the radial direction of the tool body 10 in the first through third gashes 11a, 11b, and 11c, the gash opening angle γc of the third gash 11c located rearward in the rotation direction of the first end cutting edge 13a configured to reach the rotation center o of the tool body 10 is made larger than each of the gash opening angle γa of the first gash 11a and the gash opening angle γb of the second gash 11b.

Then, in the case where the gash angle δc and the gash opening angle γc of the third gash 11c located rearward in the rotation direction of the first end cutting edge 13a configured to reach the rotation center o of the tool body 10 are made larger than the gash angle δa and the gash opening angle γa of the first gash 11a and the gash angle δb and the gash opening angle γb of the second gash 11b, a thick portion of the tool body 10 located rearward in the rotation direction of the first end cutting edge 13a configured to reach the rotation center o is largely cut by the third gash 11c, variation in size and volume of the first through third gashes 11a, 11b, and 11c are reduced, and the center of gravity of the tool body 10 approaches the rotation axis L. Further, when cutting is performed by rotating the tool body 10 at high speed, occurrence of chattering vibration in the tool body 10 is suppressed, thereby enhancing surface finish of a workpiece.

As a result of reduction of variation in size and volume of the first through third gashes 11a, 11b, and 11c, chip dischargeability in the first through third gashes 11a, 11b, and 11c is made uniform, and chips cut by the first through third end cutting edges 13a, 13b, and 13c are appropriately guided by the spiral flutes 12a, 12b, and 12c through the corresponding first through third gashes 11a, 11b, and 11c and discharged, thereby preventing clogging of chips.

Although the end mill of this embodiment includes the first through third three gashes 11a, 11b, and 11c to define the first through third three end cutting edges 13a, 13b, and 13c, five gashes may be provided to define five end cutting edges.

In the end mill of this embodiment, the spiral angle and distribution arrangement of the end cutting edges are uniform. Alternatively, in an end mill with an unequal lead in which the spiral angle is changed or an end mill of an unequal division in which distribution arrangement of end cutting edges is unequal, similarly to the embodiment, variation in size and volume of gashes can be reduced by adjusting the sizes of the gashes provided corresponding to the end cutting edges to cause the center of gravity of the tool body to approach the rotation axis.

### REFERENCE SIGNS LIST

10: tool body
11a: first gash
11b: second gash
11c: third gash
2a, 12b, 12c: spiral flute
13a: first end cutting edge
13b: second end cutting edge
13c: third end cutting edge
L: rotation axis
o: rotation center
γa: gash opening angle of first gash
γb: gash opening angle of second gash
γc: gash opening angle of third gash
δa: gash angle of first gash
δb: gash angle of second gash
δc: gash angle of third gash

## Claims

1. A method for manufacturing an end mill in which a tip portion of a tool body includes three or more odd number of gashes to define three or more odd number of end cutting edges such that one of the odd number of end cutting edges is configured to reach a rotation center while the other end cutting edges are configured not to reach the rotation center, wherein in adjusting a tilt angle in a depth direction and/or an opening angle in a radial direction of the gash provided corresponding to each of the end cutting edges to cause a center of gravity of the tool body to approach a rotation axis by adjusting a size of the gash provided corresponding to each of the end cutting edges, the tilt angle in the depth direction and/or the opening angle in the radial direction of the gash defining the end cutting edge located rearward in a rotation direction of the end cutting edge configured to reach the rotation center is made larger than the tilt angle and/or the opening angle of the gash defining the other end cutting edges.
